# EUROPEAN PATENT APPLICATION

(11) **EP 4 032 689 A1**
(43) Date of publication of application: **27.07.2022**
(21) Application number: 21382051.7
(22) Date of filing: 22.01.2021
(51) Int. Cl.: B29C 65/02, B29C 65/74, B65B 7/16, B65B 61/06, B65B 61/18, B29C 65/78

(54) **HEAT-SEALING MACHINE FOR GENERATING EASY-OPEN PACKAGES**

(71) Applicant: Ulma Packaging, S.Coop., 20560 Oñati (ES)
(72) Inventor: MADINABEITIA FERNANDEZ, Ander, 20560 OÑATI (ES); UGARTE BEITIA, Ion, 20560 Oñati (ES); LARRINGAN ERRASTI, Igor, 20560 Oñati (ES); IZQUIERDO EREÑO, Eneko, 20560 OÑATI (ES)
(74) Representative: Igartua, Ismael

(57) **Abstract**

The invention relates to a heat-sealing machine for generating easy-open packages, comprising an upper tool and a lower tool facing one another. The upper tool comprises a sealing tool (1.0), a cutting tool (1.1) which externally goes around the contour of the sealing tool (1.0), and an actuation area between said sealing tool (1.0) and said cutting tool (1.1). The lower tool comprises a support (2.0) configured for supporting a tray (5) and with an actuation area (2.2) facing the actuation area of the upper tool. The machine comprises actuation means configured for acting on the actuation area of one of the tools, to cause an end of a cover film (4) arranged on the tray (5) to move away from the cutting tool (1.1).

## Description

### TECHNICAL FIELD

The present invention relates to heat-sealing machines in which a cover film is sealed to a tray in a sealing station, and particularly to heat-sealing machines which are configured for generating easy-open packages.

### PRIOR ART

There are many types of heat-sealed packages for foods on the market. Some of them are referred to as easy-open packages, which have the advantage that the user can open them more easily. As a general rule, packages of this type are formed by a tray (a flat tray or one which defines a cavity), and a cover film sealed to the tray. The foods stay packaged between the cover film and the tray.

There are different solutions for providing an easy-open package. In some cases, there is a need to tear part of the package, usually a corner, and from that tear the cover film is peeled back, the contents of the tray being accessed. Packages of this type require a piece of the tray to break off, and this piece remains adhered to the cover film, making it difficult to completely recycle the package, for example.

In other cases, this problem is solved by providing a larger amount of cover film. Some of these solutions mean that the cover film protrudes along the entire contour of the tray, such that while manufacturing the package, the cover film is cut outside of the tray (not on the tray). Packages of this type require an excessive use of cover film.

Other solutions of this type, such as the one disclosed in US2019062032A1, mean that the cover film protrudes only in one area of the contour of the tray, generally a corner, such that the amount of cover film used is reduced. In these cases, the cutting of the cover film is mostly performed above the tray (except in the corner where it protrudes from said tray) in order to prevent said cover film from protruding from said tray and thus being able to reduce the amount of said cover film used.

### DISCLOSURE OF THE INVENTION

The object of the invention is to provide a heat-sealing machine for generating easy-open packages, as defined in the claims.

The machine comprises a sealing station with an upper tool and a lower tool facing one another and configured for holding the cover film between them in a closed position of the sealing station.

The upper tool comprises a sealing tool which defines a closed contour and is configured for pressing the cover film against the tray, sealing said cover film to said tray with said pressure, with the sealing station in the closed position; a cutting tool which externally goes around the contour of the sealing tool and is configured for pressing the cover film against the tray and for cutting said cover film on the tray as a result of said pressure, with the sealing station in the closed position; and an actuation area between said sealing tool and said cutting tool.

The lower tool comprises a support which is configured for supporting the tray, with an area of the support facing the actuation area of the upper tool being an actuation area of said support.

The machine further comprises actuation means in the sealing station, which are configured, with the sealing station in the closed position, for acting on the actuation area of the upper tool or on the actuation area of the lower tool once the cutting tool has cut the cover film on the tray, such that with said actuation at least part of the cover film facing said actuation area of the upper tool is caused to move away from the cutting tool. Said actuation can start before said cut is made, during cutting, or after the cut has been made.

The pressure exerted by the cutting tool when cutting the cover film against the tray and the heat provided by the sealing tool to the cutting tool and/or to the actuation area are thereby prevented from causing one end of the cover film which will be part of the package to remain adhered to said tray in the actuation area. In other words, the actuation of the actuation means causes said end of the cover film to move away from the cutting tool, preventing said end of the cover film from adhering to the tray or separating said end from the tray if it had adhered thereto. This thereby allows an easy-open package to be obtained without the cover film protruding from the tray, the amount of cover film used being reduced in addition to maintaining the advantage of being able to readily recycle the tray on one hand and the cover film on the other.

These and other advantages and features of the invention will become apparent in view of the figures and the detailed description of the invention.

### DESCRIPTION OF THE DRAWINGS

Figure 1 schematically shows in a simplified manner an embodiment of the machine of the invention.
Figure 2 shows a front sectional view of a sealing station of an embodiment of the packaging machine of the invention, with said sealing station in a closed position.
Figure 3 shows detail II-II of Figure 2.
Figure 4 shows a front sectional view of the sealing station of Figure 2, with said sealing station in a closed position and with a sealing tool pressing a cover film against a tray.
Figure 5 shows detail V-V of Figure 4.
Figure 6 shows a bottom view of the upper tool of the sealing station of Figure 2.
Figure 7 is a plan view of a package generated with an embodiment of the machine according to the invention.
Figure 8 is a partial side view of the package of Figure 7 according to section VII-VII of said Figure 7.
Figure 9 shows a front sectional view of a sealing station of another embodiment of the packaging machine of the invention, with said sealing station in a closed position.
Figure 10 shows a front sectional view of the sealing station of Figure 9, with said sealing station in a closed position and with a sealing tool pressing a cover film against a tray.
Figure 11 shows a front sectional view of a sealing station of another embodiment of the packaging machine of the invention, with said sealing station in a closed position.
Figure 12 shows a front sectional view of the sealing station of Figure 11, with said sealing station in a closed position and with a sealing tool pressing a cover film against a tray.

### DETAILED DISCLOSURE OF THE INVENTION

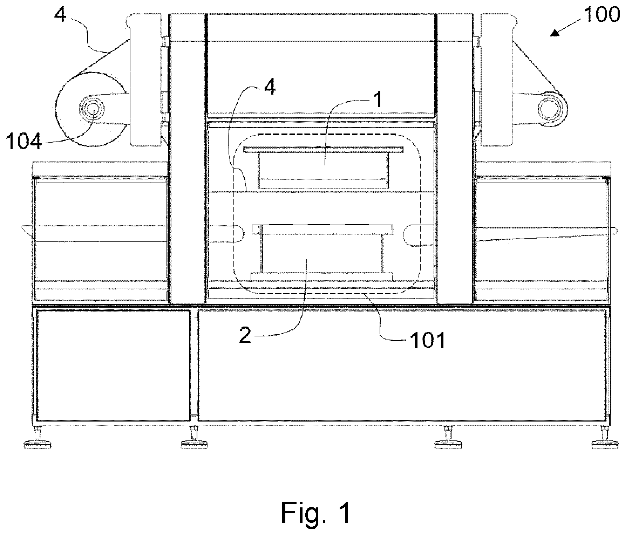

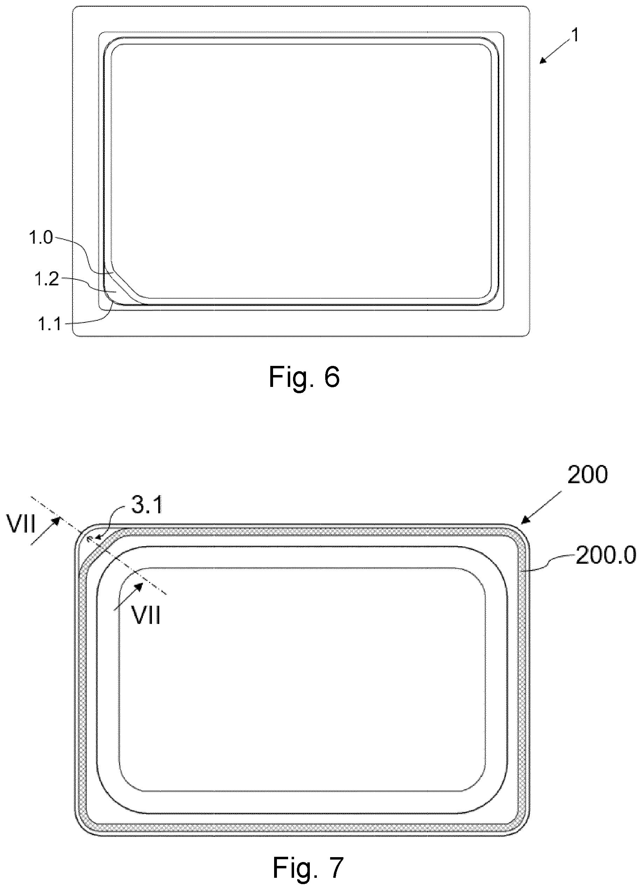

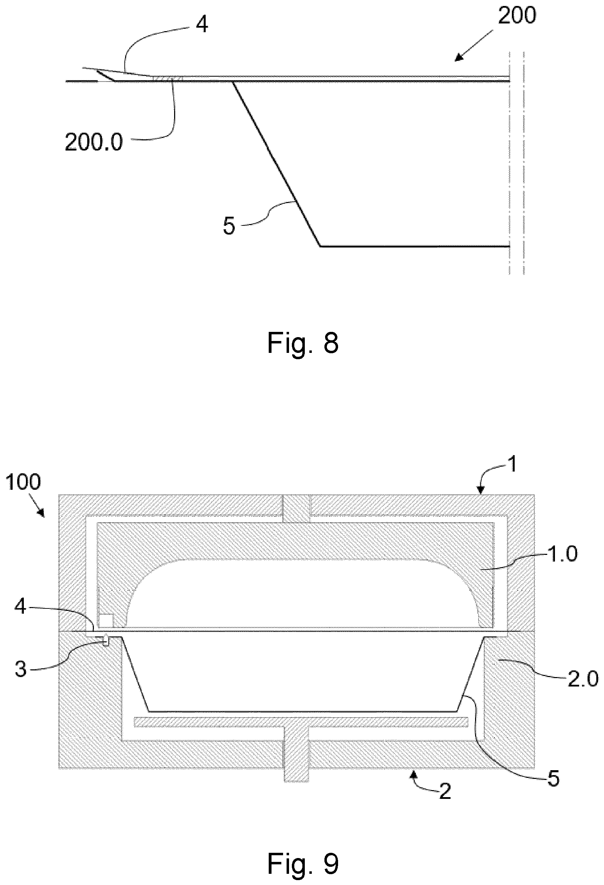

Figure 1 shows in a simplified manner an embodiment of the heat-sealing machine 100 of the invention, which is configured for generating easy-open packages 200, such as the one the shown in Figures 7 and 8. The machine 100 comprises a sealing station 101 comprising an upper tool 1 and a lower tool 2 facing one another and configured for being spaced apart from one another in an open position of the sealing station 101, and for being in contact in a closed position of said sealing station 101. Said sealing station 101 is suitable for receiving a cover film 4 and at least one tray 5 (a flat tray or one with a flap around a cavity) between the two tools 1 and 2, and in the closed position the cover film 4 is held between the two tools 1 and 2. The machine 100 comprises a film feeder 104 for supplying the cover film 4 to the sealing station 101 and may comprise a tray feeder, not depicted in the figures, although said trays 5 could be supplied manually.

The upper tool 1 comprises a sealing tool 1.0 which defines a closed contour and is configured for being able to seal the cover film 4 to the tray 5 by heat, pressing said cover film 4 against the tray 5 (Figures 7 and 8 show by way of example a sealing area 200.0 between the tray 5 and the cover film 4). To that end, the sealing station 101 comprises heating means, not depicted in the figures, configured for heating said sealing tool 1.0. The upper tool 1 further comprises a cutting tool 1.1, a blade for example, which externally goes around the contour of the sealing tool 1.0 and an actuation area 1.2 between said sealing tool 1.0 and said cutting tool 1.1. The cutting tool 1.1 is configured for pressing the cover film 4 against the tray 5 and for cutting said cover film 4 on said tray 5 as a result of said pressure (without cutting said tray 5). The sealing tool 1.0 and the cutting tool 1.1 are configured for acting on the cover film 4 with the sealing station 101 in the closed position.

The cut made on the cover film 4 is a cut which defines a closed contour, such that individual packages 200 are obtained. Packaging machines 100 suitable for performing said sealing on pre-formed trays are known as heat-sealing machines.

The operation is generally as follows: with the sealing station 101 in the closed position, such that the tools 1 and 2 hold the cover film 4, at first the sealing tool 1.0 does not cooperate with the lower tool 2 and does not seal the cover film 4 to the tray 5. For generating said sealing, the sealing tool 1.0 is caused to move towards the lower tool 2. During this movement, said sealing tool 1.0 contacts the cover film 4 and presses it against the tray 5, causing them to seal together. The cutting tool 1.1 is preferably moved integrally with said sealing tool 1.0 so as to cut said cover film 4 on the tray 5.

The lower tool 2, in turn, comprises a support 2.0 which is configured for supporting the tray 5, the area of the support 2.0 facing the actuation area 1.2 of the upper tool 1 being an actuation area 2.2 of said support 2.0.

The machine 100 comprises actuation means configured, with the sealing station 101 in the closed position and once the cutting tool 1.1 has cut the cover film 4 on the tray 5, for acting on the actuation area 1.2 of the upper tool 1 or on the actuation area 2.2 of the lower tool 2, such that with said actuation at least part of the cover film 4 facing said actuation area 1.2 of the upper tool 1 is caused to move away from the cutting tool 1.1. The actuation of the actuation means is furthermore preferably generated while the sealing tool 1.0 and/or the cutting tool 1.1 are pressing the cover film 4 against the tray 5.

In some embodiments of the machine 100, the actuation means comprise a rod 3 associated with one of the tools 1 and 2 of the sealing station 101, and an opening in the other tool 1 and 2 facing the rod 3 and configured for partially housing said rod 3. The rod 3 faces the actuation area 1.2, 2.2 of the other tool 1, 2 of said sealing station 101, and said other tool 1, 2 comprises an opening in its actuation area 1.2, 2.2 facing said rod 3 and suitable for at least partially housing said rod 3. The rod 3 is configured for protruding from the corresponding tool 1, 2 towards the other tool 1, 2, such that at least one end of said rod 3 is housed in the opening of the other tool 1, 2. As the rod 3 surpasses the area where the cover film 4 is arranged, said rod 3 acts on said cover film 4 causing it to be retracted once the cutting tool 1.1 cuts said cover film 4, moving the cut end of the cover film 4 that faces the actuation area 1.2 away from the cutting tool 1.1.

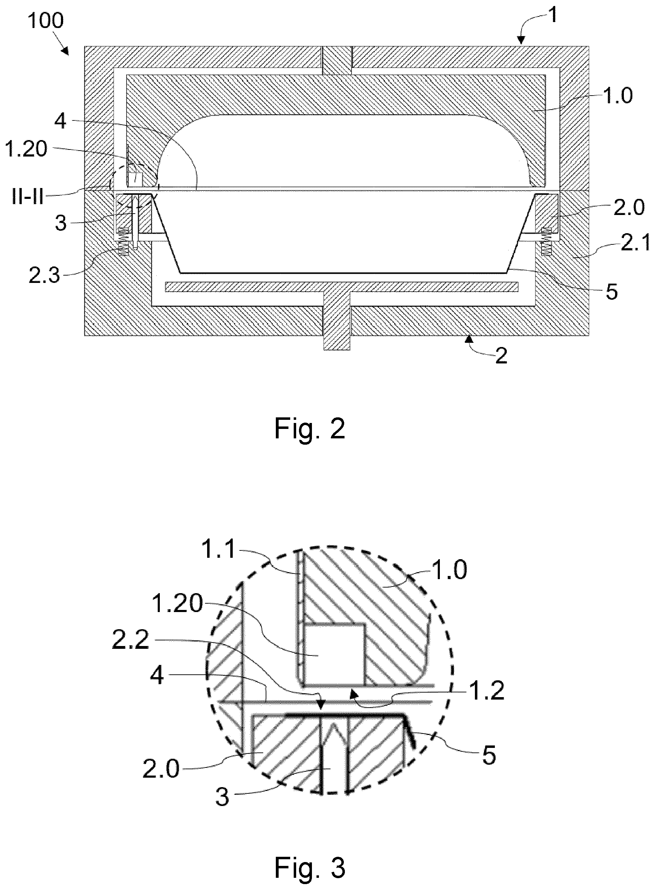

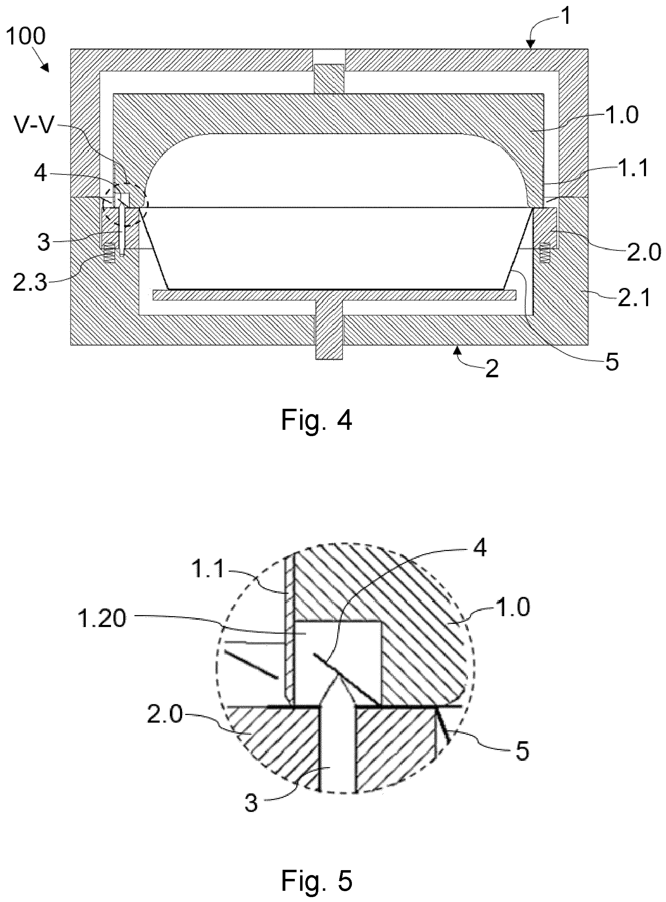

In some embodiments, like in the one depicted in Figures 2 to 6, the actuation means comprise a rod 3 fixed to the lower tool 2. The lower tool 2 comprises a base 2.1 below the support 2.0, the support 2.0 comprising a through hole 2.01 facing the actuation area 1.2 of the upper tool 1 and at least partially housing the rod 3. The rod 3 is fixed to the base 2.1 and the support 2.0 is attached to the base 2.1 with freedom of vertical movement, by means of a spring 2.3 for example, between a standby position in which the rod 3 does not protrude above said support 2.0 towards the upper tool 1 (Figures 2 and 3) and an actuation position in which the rod 3 at least partially protrudes above said support 2.0 (Figures 4 and 5). The support 2.0 is arranged in the standby position while the sealing station 101 is in the open position, such that the rod 3 does not protrude from the support 2.0, which allows the tray 5 to be more readily positioned on said support 2.0. In the closed position of the sealing station 101, at first the sealing tool 1.0 does not exert pressure on the support 2.0 and is kept, as a result the support 2.0, in the standby position (without compressing the spring 2.3 and without the rod 3 protruding above the support 2.0). As the sealing tool 1.0 moves downwards, there comes a time when it causes the integral movement of the support 2.0 from the standby position of said support 2.0 towards the actuation position in which said support 2.0 is arranged at a lower level with respect to its standby position. During that interval, the sealing tool 1.0 presses the cover film 4 against the tray 5 which is supported on the support 2.0, sealing the cover film 4 to the tray 5. This downward movement of the support 2.0 causes the compression of the spring 2.3, such that the rod 3, by remaining fixed, protrudes at least partially above said support 2.0. and causes at least part of the cover film 4 facing the actuation area 1.2 of the upper tool 1 to move away from the cutting tool 1.1 once the cutting tool 1.1 has cut the cover film 4. In these embodiments, the cutting tool 1.1 may comprise a relative movement with respect to the sealing tool 1.0: for example, the cutting tool 1.1 may be arranged lagging behind in its vertical path with respect to the sealing tool 1.0 such that the sealing tool 1.0 contacts the cover film 4 before the cutting tool 1.1 does, and when the sealing tool 1.0 continues to move, causing the downward movement of the support 2.0 and the sealing of the cover film 4 to the tray 5, the cutting tool 1.1 advances with respect to the sealing tool 1.0 for cutting said cover film 4 on said tray 5.

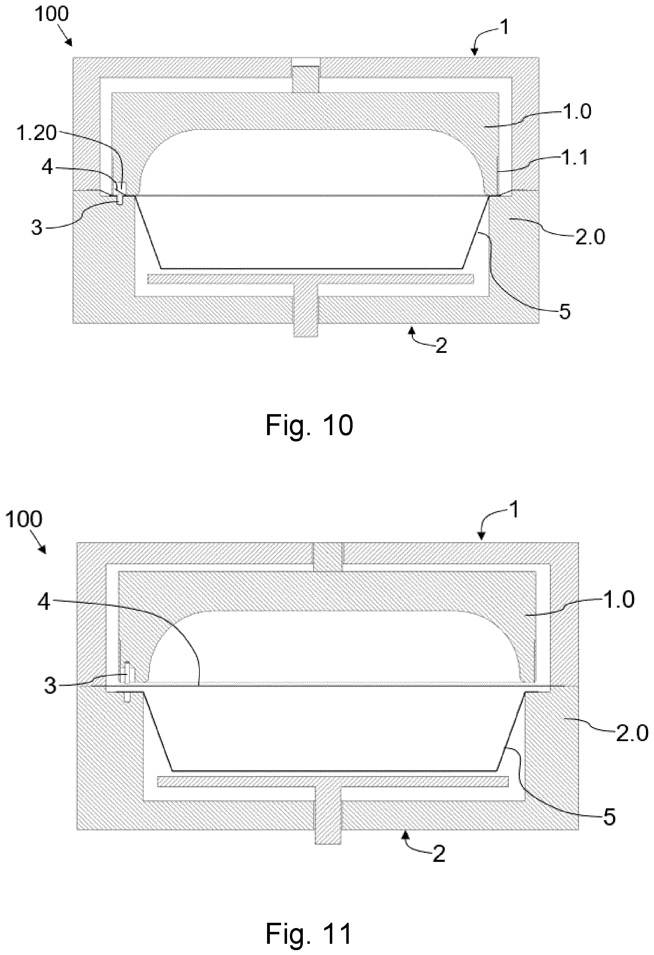

In other embodiments in which the actuation means comprise a rod 3 fixed to the lower tool 2, such as the one depicted in Figures 9 and 10, the support 2.0 functions as a base 2.1, i.e., the support 2.0 can remain stationary. In these embodiments, the rod 3 at least partially protrudes above said support 2.0 at all times, and the cutting tool 1.1 may (or may not) comprise a relative movement with respect to the sealing tool 1.0 (Figures 9 and 10 show a stationary support 2.0 and a cutting tool 1.1 fixed with respect to the sealing tool 1.0).

In some of the embodiments in which the rod 3 is fixed to the lower tool 2, the actuation area 1.2 of the upper tool 1 comprises a receiving cavity 1.20 so as to allow at least part of the cover film 4 facing said receiving cavity 1.20 to be raised, being separated from at least part of the tray 5, when the actuation means cause same to move away from the cutting tool 1.0. The separation of the cut end of the cover film 4 from the cutting tool 1.1 and from the tray 5 is thereby assured more readily and with greater certainty, which allows ensuring that said end is not sealed to said tray 5. In these cases, the receiving cavity 1.20 furthermore functions as an opening configured for partially housing the rod 3.

The rod 3 fixed to the lower tool 2 may comprise a cutting edge for making a cut in the tray 5, and thus facilitate acting on the cover film 4. This cutting edge would not be required if the tray 5 comprises a cut or hole facing the rod 3. The cutting edge of the rod 3 may have any desired shape (the vertex of a cone, a crescent shape, two sides of a triangle, three sides of a rectangle, etc.), for generating a cut in the tray 5 with said shape (Figure 7 shows a crescent shape 3.1), but it would preferably not limit a closed contour (it would thus not define a circle, a complete triangle, or a complete rectangle, for example). Not defining a closed contour would prevent the detachment of a piece of tray 5, which would be separated from the rest of the tray 5 as a result of the actuation of the rod 3, which could complicate the removal of said piece and, therefore, require a more complex machine 100. In some cases, the cutting edge may be accompanied by a surface of the rod 3 configured for pushing the tray 5 as it is cutting it.

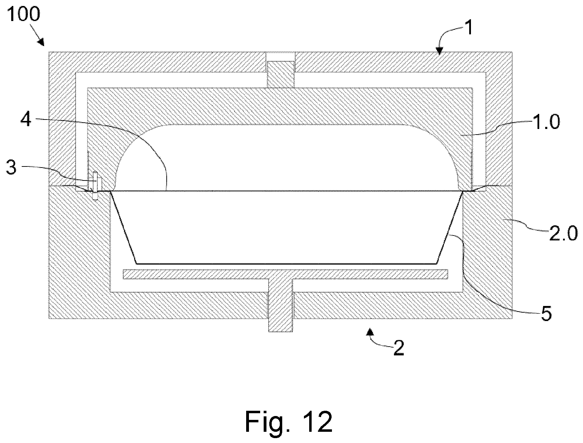

In other embodiments in which the actuation means comprise a rod 3, said rod 3 can be fixed to the upper tool 1 as occurs with the embodiment depicted in Figures 11 and 12. In this embodiment, the rod 3 is fixed to the sealing tool 1.0 of the upper tool 1 (although it could be fixed to the cutting tool 1.1), and said rod 3 does not comprise any cutting edge to avoid cutting the cover film 4. In some of these embodiments, the actuation area 1.2 of the upper tool 1 comprises a receiving cavity 1.20 such as the one described above, and it would be particularly advantageous for the tray 5 to comprise a cut or hole facing the rod 3, or at least for the tray 5 to be made of a deformable material, so that the actuation of the rod 3 can introduce the cover film 4 at least into the opening of the lower tool 2 configured for partially housing the rod 3, thus causing the end of the cover film 4 which will be part of the package 200 to move away from the cutting tool 1.1 and to not adhere to the tray 5 as shown in Figure 12.

In other embodiments not depicted in the figures, instead of a rod 3 the actuation means comprise a suction device configured for causing a suction on the cover film 4 facing the actuation area 1.2 of the upper tool 1.

In some of these embodiments in which the actuation means comprise a suction device, the suction device is configured for generating the suction from the upper tool 1 and the upper tool 1 comprises a receiving cavity 1.20 such as the one described above. The suction causes part of the cover film 4 to be thus received in said receiving cavity 1.20. The suction device can be fixed and generate a suction for attracting the corresponding part of the cover film 4, although it could comprise an element such as a suction cup, for example, that is vertically movable along said receiving cavity 1.20, such that its movement causes the movement of said part of the cover film 4.

In some of these embodiments in which the actuation means comprise a suction device, the suction device is configured for generating the suction from the lower tool 2. In this case, a suction attracting the cover film 4 is generated, and to that end the tray 5 would comprise at least one hole affected by the suction, such that the cover film 4 arranged above said hole would be attracted by suction. Although it would not be necessary in this case to have a receiving cavity 1.20 such as the one described above in the upper tool 1, said upper tool 1 could also comprise a receiving cavity 1.20. In these embodiments, the lower tool 2 preferably comprises a receiving cavity facing the actuation area 1.2 of the upper tool 1, so as to allow the cover film 4 to be pulled. The hole of the tray 5 would be arranged on said receiving cavity.

In other embodiments, the actuation means comprise an injection device. In this case, instead of cover film 4 being attracted, the cover film 4 would be pushed with an injection of gas (air, for example). If the injection device is configured for performing the injection from the upper tool 1, the lower tool 2 would comprise a receiving cavity for receiving the cover film 4 (the tray 5 would have a hole that said cover film 4 goes through). If the injection device is configured for performing the injection from the lower tool 2, the upper tool 1 would comprise a receiving cavity for receiving the cover film 4 (the tray 5 would preferably have a hole to allow the passage of the gas towards the cover film 4).

## Claims

1. Heat-sealing machine for generating easy-open packages, the machine (100) comprising a sealing station (101) with an upper tool (1) and a lower tool (2) facing one another and configured for holding the cover film (4) between them in a closed position of the sealing station (101), the upper tool (1) comprising a sealing tool (1.0) which defines a closed contour and is configured for pressing the cover film (4) against the tray (5), sealing said cover film (4) to said tray (5), with the sealing station (101) in the closed position; a cutting tool (1.1) which externally goes around the contour of the sealing tool (1.0) and is configured for pressing the cover film (4) against the tray (5) and for cutting said cover film (4) on the tray (5) as a result of said pressure, with the sealing station (101) in the closed position; and an actuation area (1.2) between said sealing tool (1.0) and said cutting tool (1.1), and the lower tool (2) comprising a support (2.0) which is configured for supporting the tray (5), with an area of the support (2.0) facing the actuation area (1.2) of the upper tool (1) being an actuation area (2.2) of said support (2.0), **characterized in that** the machine (100) comprises actuation means configured, with the sealing station (101) in the closed position, for acting on the actuation area (1.2) of the upper tool (1) or on the actuation area (2.2) of the lower tool (2) once the cutting tool (1.1) has cut the cover film (4), such that with said actuation at least part of the cover film (4) facing said actuation area (1.2) of the upper tool (1) is caused to move away from the cutting tool (1.1).

2. Machine according to claim 1, wherein the actuation means comprise a rod (3) associated with one of the tools (1, 2) of the sealing station (101) facing the actuation area (1.2, 2.2) of the other tool (1, 2) of said sealing station (101) and said other tool (1, 2) comprises an opening in its actuation area (1.2, 2.2) facing said rod (3) for at least partially housing said rod (3), said rod (3) being configured for protruding from the corresponding tool (1, 2) towards the other tool (1, 2) to cause at least part of the cover film (4) facing the actuation area (1.2) of the upper tool (1) to move away from the cutting tool (1.1).

3. Machine according to claim 2, wherein the rod (3) is associated with the lower tool (2) and configured for protruding above the support (2.0) of the lower tool (2), the upper tool (1) comprising an opening in its actuation area (1.2) facing said rod (3) for at least partially housing said rod (3).

4. Machine according to claim 3, wherein the lower tool (2) comprises a base (2.1) below the support (2.0), the support (2.0) comprising a through hole (2.01) facing the actuation area (1.2) of the upper tool (1) and at least partially housing the rod (3), said rod (3) being attached to the base (2.1) and the support (2.0) being attached to said base (2.1) with freedom of vertical movement between a standby position in which the rod (3) does not protrude above said support (2.0) towards the upper tool (1) and an actuation position in which said rod (3) at least partially protrudes above said support (2.0).

5. Machine according to claim 4, wherein the support (2.0) is attached to the base (2.1) by means of at least one spring (2.3).

6. Machine according to claim 3, wherein the rod (3) is firmly attached to the support (2.0) of the lower tool (2) and protrudes at least partially above said support (2.0) towards the upper tool (1).

7. Machine according to any of claims 3 to 6, wherein the rod (3) comprises a cutting edge at its end facing the upper tool (1), said cutting edge being configured for making a cut in the part of the tray (5) arranged on the actuation area (2.2) of the support (2.0) of the lower tool (2).

8. Machine according to claim 7, wherein the cutting edge of the rod (3) does not define a closed contour.

9. Machine according to claim 2, wherein the rod (3) is associated with the upper tool (1) and configured for protruding below the cutting tool (1.1) of the upper tool (1), the lower tool (2) comprising an opening in its actuation area (2.2) facing said rod (3) for at least partially housing said rod (3).

10. Machine according to claim 9, wherein the rod (3) is fixed to the cutting tool (1.1) or to the sealing tool (1.0) of the upper tool (1).

11. Machine according to any of claims 1 to 10, wherein the actuation area (1.2) of the upper tool (1) comprises a receiving cavity (1.20) facing the actuation area (2.2) of the support (2.0) so as to allow at least part of the cover film facing said actuation area (1.2) of the upper tool (1) to be raised, being separated from at least part of the tray (5) arranged on said actuation area (2.2) of said support (2.0) when the actuation means cause same to move away from the cutting tool (1.0).

12. Machine according to claim 11, wherein the actuation means comprise a suction device associated with the upper tool (1) and configured for suctioning the cover film (4) from said upper tool (1) towards the receiving cavity (1.20) of the actuation area (1.2) of said upper tool (1).

13. Machine according to claim 12, wherein the suction device is attached to the upper tool (1) with freedom of vertical movement.

14. Machine according to claim 12, wherein the actuation means comprise an injection device configured for injecting a gas from the lower tool (2) towards the receiving cavity (1.20) of the actuation area (1.2) of the upper tool (1).

15. Machine according to any of claims 1 to 14, wherein the actuation area (2.2) of the lower tool (2) comprises a receiving cavity facing the actuation area (1.2) of the upper tool (1) and the actuation means comprise an injection device configured for injecting a pressurized gas from the upper tool (1) towards said receiving cavity.
